# NEW EUROPEAN PATENT SPECIFICATION

(11) **EP 2 212 105 B2**
(45) Date of publication and mention of the opposition decision: **17.07.2019**
(45) Mention of the grant of the patent: 04.05.2016
(21) Application number: 08845911.0
(22) Date of filing: 15.10.2008
(51) Int. Cl.: B32B 13/08, B32B 17/02, B32B 27/02, B32B 29/00, C04B 111/40, C04B 28/14

(54) **HIGH HYDROXYETHYLATED STARCH AND HIGH DISPERSANT LEVELS IN GYPSUM WALLBOARD**
GIPSWANDPLATTE MIT EINEM HOHEN GEHALT AN HYDROXYETHYLIERTER STÄRKE UND EINEM HOHEN GEHALT AN DISPERSIONSMITTEL
PLAQUE DE PLÂTRE AVEC UN TAUX D'AMIDON HYDROXYÉTHYLÉ ÉLEVÉ ET UN TAUX D'AGENT DISPERSANT ÉLEVÉ

(30) Priority: 31.10.2007 US 932211
(43) Date of publication of application: 04.08.2010
(73) Proprietor: United States Gypsum Company, Chicago, IL 60661 (US)
(72) Inventor: YU, Qiang, Grayslake, IL 60030 (US); TRACY, Sharon L., Buffalo Grove, IL 60089 (US)
(74) Representative: BSB Patentanwälte Schütte & Engelen Partnerschaft mbB
(86) International application number: PCT/US2008/079903
(87) International publication number: WO 2009/058558

(56) References cited:
- WO-A2-2006/135613
- WO-A2-2007/024420
- US-A1- 2005 126 437
- US-A1- 2005 126 437
- US-A1- 2005 250 858
- US-A1- 2005 250 858
- US-A1- 2006 278 132
- US-A1- 2006 278 132
- US-A1- 2006 278 133
- US-A1- 2006 278 133
- US-A1- 2007 048 490
- US-A1- 2007 048 490
- US-A1- 2007 059 513
- US-A1- 2007 059 513
- US-B1- 6 632 550

## Description

### TECHNICAL FIELD

This invention pertains to a gypsum-containing slurry containing a hydroxyethylated starch, a naphthalenesulfonate dispersant, and sodium trimetaphosphate, and a lightweight high strenghth gypsum wallboard containing a hydroxyethylated starch, a naphthalenesulfonate dispersant, and sodium trimetaphosphate.

### BACKGROUND ART

Certain properties of gypsum (calcium sulfate dihydrate) make it very popular for use in making industrial and building products, such as gypsum wallboard. Gypsum is a plentiful and generally inexpensive raw material which, through a process of dehydration and rehydration, can be cast, molded or otherwise formed into useful shapes. The base material from which gypsum wallboard and other gypsum products are manufactured is the hemihydrate form of calcium sulfate (CaSO₄·1/2H₂O), commonly termed "stucco," which is produced by heat conversion of the dihydrate form of calcium sulfate (CaSO₄·2H₂O), from which 1-1/2 water molecules been removed.

Conventional gypsum-containing products such as gypsum wallboard have many advantages, such as low cost and easy workability, although substantial amounts of gypsum dust can be generated when the products are cut or drilled. Various improvements have been achieved in making gypsum-containing products using starches as ingredients in the slurries used to make such products. Pregelatinized starch, like glue, can increase flexural strength and compressive strength of gypsum-containing products including gypsum wallboard. Known gypsum wallboard contains starch at levels of less than about 10 lbs/MSF.

It is also necessary to use substantial amounts of water in gypsum slurries containing pregelatinized starch in order to ensure proper flowability of the slurry. Unfortunately, most of this water eventually must be driven off by drying, which is expensive due to the high cost of the fuels used in the drying process. This drying step is also time-consuming. It has been found that the use of naphthalenesulfonate dispersants can increase the fluidity of the slurries, thus overcoming the water demand problem. In addition, it has also been found that the naphthalenesulfonate dispersants, if the usage level is high enough, can cross-link to the pregelatinized starch to bind the gypsum crystals together after drying, thus increasing dry strength of the gypsum composite. Thus, the combination of the pregelatinized starch and the naphthalenesulfonate dispersant provide a glue-like effect in binding the set gypsum crystals together. Trimetaphosphate salts have not in the past been recognized to affect gypsum slurry water requirements. However, the present inventors have discovered that increasing the level of the trimetaphosphate salt to hitherto unknown levels in the presence of a specific dispersant makes it possible to achieve proper slurry flowability with unexpectedly reduced amounts of water, even in the presence of high starch levels. This, of course, is highly desirable because it in turn reduces fuel usage for drying as well as the process time associated with subsequent water removal process steps. Thus the present inventors have also discovered that the dry strength of gypsum board can be increased by using a naphthalenesulfonate dispersant in combination with pregelatinized starch in the slurry used to make the wallboard.

The gypsum wallboards of the instant invention should be distinguished from acoustical boards or tiles that do not have face sheets. Also, the wallboards of the instant invention should be distinguished from acoustical boards or tiles that include polystyrene as a lightweight aggregate. Importantly, the aforementioned acoustical boards and tiles do not meet many ASTM standards that apply to gypsum wallboards. For example, known acoustical boards do not have the flexural strength required of gypsum wallboards including those of the present invention. Conversely, in order for acoustical boards or tiles to meet ASTM standards, it is required that an exposed surface of the acoustical boards or tiles have hollow voids or depressions that would be undesirable in a gypsum wallboard, and would adversely effect nail pull resistance properties.

Dust generation is a potential problem during the installation of all wallboard. When gypsum wallboard is worked, for example, by cutting, sawing, routing, snapping, nailing or screwing down, or drilling, substantial amounts of gypsum dust can be generated. For the purposes of the instant disclosure, "dusting" and "dust generation" means the release of airborne dust into the surrounding workspace during working of a gypsum-containing product, by, for example, cutting, sawing, routing, score/snapping, nailing or screwing down, or drilling the wallboard. Working can also generally include normal board handling, including dust produced on accidentally scraping and gouging the boards during transport, carrying, and installation. If a way could be found to produce a low density wallboard in which such dust generation is significantly reduced, this would represent a particularly useful contribution to the art.

Pregelatinized starches can provide useful gypsum-containing slurries. A low dust gypsum wallboard formed from a slurry containing pregelatinized starch is e.g. disclosed in US 2007/048490 A1. One drawback of pregelatinized starch in comparison with regular acid-modified starch is higher water demand. Therefore, higher water-stucco ratios are required to make a slurry with pregelatinized starch that has a fluidity suitable for wallboard formation. Furthermore, if a way could be found to enhance fluidity in a particular gypsum-containing slurry including containing an alternative starch, a naphthalenesulfonate dispersant, and sodium trimetaphosphate, while maintaining adequate strength or improving strength in a finished gypsum wallboard, this would represent a useful contribution to the art.

### DISCLOSURE OF THE INVENTION

The invention generally comprises a slurry according to claim 1 including stucco, a hydroxyethylated starch, naphthalenesulfonate dispersant, and sodium trimetaphosphate. The naphthalenesulfonate dispersant is present in the form of an aqueous solution containing 40% to 45% by weight naphthalenesulfonate and the aqueous solution is present in an amount of 1.5% by weight based on the weight of stucco. The hydroxyethylated starch is present in an amount of 3% by weight based on the weight of dry stucco in the formulation. The sodium trimetaphosphate is present in an amount of 0.3% by weight based on the weight of dry stucco. Other slurry additives can include accelerators, binders, paper or glass fibers and other known constituents.

A gypsum-containing product is gypsum wallboard according to claim 2. In this embodiment, the invention constitutes gypsum wallboard comprising a set gypsum composition formed between two substantially parallel cover sheets, the set gypsum composition made using the gypsum-containing slurry of water, stucco, a hydroxyethylated starch, a naphthalenesulfonate dispersant, and sodium trimetaphosphate. This gypsum wallboard made in accordance with the invention has unexpected high strength, yet much lower weight than conventional boards.

### BEST MODE FOR CARRYING OUT THE INVENTION

It has now unexpectedly been found hydroxyethylated starches have a lower water demand while enhancing fluidity in a gypsum-containing slurry. Furthermore, finished gypsum wallboards prepared from gypsum-containing slurries including water, stucco, a hydroxyethylated starch, naphthalenesulfonate dispersant, and sodium trimetaphosphate exhibit improved strength characteristics, particularly nail pull performance.

Hydroxyethylated starch, sometimes referred to as "ethylated starch," must be used in gypsum-containing slurries prepared in accordance with the present invention. A preferred hydroxyethylated starch is S-Size 30G, a modified corn starch available from PacMoore Products, Hammond, Indiana, having the following typical analysis: moisture 10 to 13%, pH 5.0 to 7.5, particle size 95% through 100 mesh, specific gravity 1.50, molecular weight: greater than about 10,000, bulk density 35 pcf (about 560 kg/m³). See also Example 11.

Hydroxyethylated starch should be used in an amount of 3% by weight, based on the weight of dry stucco used in the gypsum-containing slurry.

Enhanced fluidity in gypsum-containing slurries is related to lower viscosity. It has been found that a particular combination of a hydroxyethylated starch, naphthalenesulfonate dispersant, and sodium trimetaphosphate, used in a gypsum-containing slurry made according to the present invention, provides lower viscosity and better film-forming characteristics than slurries made with other starches. For example, in aqueous samples comprising pregelatinized starch, viscosities are relatively high, while producing films of good strength on cooking. In aqueous samples comprising hydroxyethylated starch and a dispersant, viscosities are lowered, while producing a film that is too flexible. In aqueous samples comprising hydroxyethylated starch, a dispersant, and sodium trimetaphosphate, viscosities are lowered, while producing a film that is strong, yet resilient. See Example 12.

Without intending to be bound by theory, the particular combination of a hydroxyethylated starch, naphthalenesulfonate dispersant, and sodium trimetaphosphate, used in a gypsum-containing slurry for production of a gypsum wallboard provides unexpectedly enhanced crosslinking to provide a more flexible, yet strong and resilient film, that produces far better nail pull properties and other strength characteristics than would otherwise have been predicted.

According to the present invention, a wallboard is provided made from gypsum-containing slurries containing stucco, a hydroxyethylated starch, naphthalenesulfonate dispersant, and sodium trimetaphosphate. The naphthalenesulfonate dispersant is present in an amount of about 0.1% - 3.0% by weight based on the weight of dry stucco. The hydroxyethylated starch is present in an amount of 3% by weight based on the weight of dry stucco in the formulation. The sodium trimetaphosphate is present in an amount of about 0.1% - 0.4% by weight based on the weight of dry stucco. Other ingredients that may be used in the slurry include binders, paper fiber, glass fiber, and accelerators. A soap foam is normally added to the newly formulated gypsum-containing slurries to reduce the density of the finished gypsum-containing product, for example, gypsum wallboard.

The rehydration of calcium sulfate hemihydrate (stucco) and consequent hardening requires a specific, theoretical amount of water (1-1/2 moles water/ mole of stucco) to form calcium sulfate dihydrate crystals. However, the commercial process generally calls for excess water. This excess process water produces evaporative water voids in the gypsum crystal matrix which are generally substantially irregular in shape, and also are interconnected with other water voids, forming irregular channels in a generally continuous network between set gypsum crystals. In contrast, air (bubble) voids are introduced into the gypsum slurry using soap foam. The air voids are generally spherical/ round in shape, and also are generally separated from other air voids and thus generally discontinuous. The water voids can be distributed within the walls of the air voids (see, for example, Figs. 8-10).

In softer wallboards, dust can be captured in both the water voids and air voids (e.g. capture of small gypsum needles as single crystal dust). Harder wallboards favor dust capture in the air voids, since larger chunks or fragments of the set gypsum core are generated on working of these boards. In this case the dust fragments are too large for the water voids, but are trapped in the air voids. It is possible, according to one embodiment of the present invention, to achieve increased dust capture by introducing a preferred void/pore size distribution within the set gypsum core. It is preferred to have a distribution of small and large void sizes, as a distribution of air and water voids. In one embodiment, a preferred air void distribution can be prepared using soap foam. See Examples 6 and 7 below.

The ratio of air voids (greater than about 10 microns) to water voids (less than about 5 microns) within the set gypsum core can range from about 1.8:1 to about 9:1. A preferred ratio of air voids (greater than about 10 microns) to water voids (less than about 5 microns) within the set gypsum core can range from about 2:1 to about 3:1. In one embodiment, the void/pore size distribution within the set gypsum core should range from about 10 - 30% of voids less about 5 microns and from about 70 - 90% of voids greater than about 10 microns, as a percentage of total voids measured. Stated in another way, the ratio of air voids (greater than 10 microns) to water voids (less than 5 microns) within the set gypsum core ranges from about 2.3:1 to about 9:1. In a preferred embodiment, the void/pore size distribution within the set gypsum core should range from about 30 - 35% of voids less about 5 microns and from about 65 - 70% of voids greater than about 10 microns, as a percentage of total voids measured. Stated in another way, the ratio of air voids (greater than 10 microns) to water voids (less than 5 microns) within the set gypsum core ranges from about 1.8:1 to about 2.3:1.

It is preferred that the average air (bubble) void size be less than about 100 microns in diameter. In a preferred embodiment, the void/pore size distribution within the set gypsum core is: greater than about 100 microns (20%), from about 50 microns to about 100 microns (30%), and less than about 50 microns (50%). That is, a preferred median void/pore size is about 50 microns.

The air voids can reduce the bonding strength between a foamed low density set gypsum core and the cover sheets. Since greater than half of the composite gypsum boards by volume may consist of air voids due to foam, the foam can interfere with the bond between the foamed low density set gypsum core and the paper cover sheets. This is addressed by optionally providing a non-foamed (or reduced-foamed) bonding high density layer on the gypsum core-contacting surfaces of either the top cover sheet or the bottom cover sheet, or both the top cover sheet and the bottom cover sheet, prior to applying the cover sheets to the core. This non-foamed, or alternatively, reduced-foamed, bonding high density layer formulation typically will be the same as that of the gypsum slurry core formulation, except that either no soap will be added, or a substantially reduced amount of soap (foam) will be added. Optionally, in order to form this bonding layer, foam can be mechanically removed from the core formulation, or a different foam-free formulation can be applied at the foamed low density set gypsum core/ face paper interface.

Soap foam is preferred to introduce and to control the air (bubble) void sizes and distribution in the set gypsum core, and to control the density of the set gypsum core. A preferred range of soap is from about 0.2 lb/MSF (about 0.001 kg/m²) to about 0.7 lb/MSF (about 0.003 kg/m²); a more preferred level of soap is about 0.4 lb/MSF (about 0.002 kgm/m²) to about 0.5 lb/MSF (about 0.0024 kg/m²).

Soap foam must be added in an amount effective to produce the desired densities, and in a controlled manner. In order to control the process, an operator must monitor the head of the board forming line, and keep the envelope filled. If the envelope is not kept filled, wallboards with hollow edges result, since the slurry cannot fill the necessary volume. The envelope volume is kept filled by increasing the soap usage to prevent rupture of air bubbles during manufacturing of the board (for better retaining the air bubbles), or by increasing the air foam rate. Thus, generally, the envelope volume is controlled and adjusted either by increasing or decreasing the soap usage, or by increasing or decreasing the air foam rate. The art of controlling the head includes adjustments to the "dynamic slurry" on the table by adding soap foam to increase slurry volume, or by decreasing soap foam usage to decrease slurry volume.

A naphthalenesulfonate dispersant must be used in gypsum-containing slurries prepared in accordance with the present invention. The naphthalenesulfonate dispersants used in the present invention include polynaphthalenesulfonic acid and its salts (polynaphthalenesulfonates) and derivatives, which are condensation products of naphthalenesulfonic acids and formaldehyde. Particularly desirable polynaphthalenesulfonates include sodium and calcium naphthalenesulfonate. The average molecular weight of the naphthalenesulfonates can range from about 3,000 to 27,000, although it is preferred that the molecular weight be about 8,000 to 22,000, and more preferred that the molecular weight be about 12,000 to 17,000. As a commercial product, a higher molecular weight dispersant has higher viscosity, and lower solids content, than a lower molecular weight dispersant. Useful naphthalenesulfonates include DILOFLO, DAXAD, and LOMAR D, available from GEO Specialty Chemicals, Lafayette, Indiana. The naphthalenesulfonates are used as aqueous solutions in the range 40-45%.

The polynaphthalenesulfonates useful in the present invention have the general structure (I): 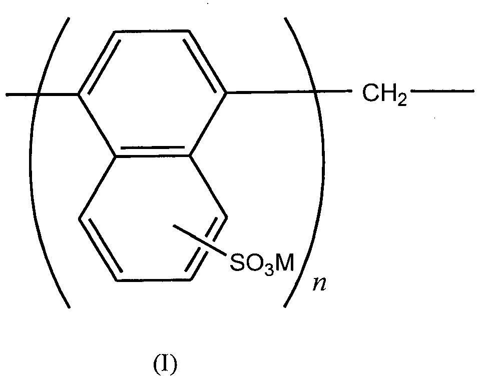 wherein *n* is >2, and wherein M is sodium, potassium, calcium, and the like.

The naphthalenesulfonate dispersant is used in the form of an aqueous solution containing 40% to 45% by weight naphthalenesulfonate and the aqueous solution is present in an amount of 1.5% by weight based on the weight of stucco. In contrast, known gypsum wallboard contains this dispersant at levels of about 0.4% by weight, or less, based on the weight of dry stucco.

The gypsum-containing slurry contains sodium trimetaphosphate.

Sodium trimetaphosphate is a known additive in gypsum-containing compositions, although it is generally used in a range of from about 0.05% to about 0.08% by weight based on the weight of dry stucco used in the gypsum slurry. In the embodiments of the present invention, sodium trimetaphosphate (or other water-soluble metaphosphate or polyphosphate) is present at 0,3% by weight based on the weight of dry stucco used in the gypsum composite formulation.

There are two forms of stucco, alpha and beta. These two types of stucco are produced by different means of calcination. In the present inventions either the beta or the alpha form of stucco may be used.

Accelerators can be used in the gypsum-containing compositions of the present invention, as described in U.S. Patent No. 6,409,825 to Yu et al., herein incorporated by reference. One desirable heat resistant accelerator (HRA) can be made from the dry grinding of landplaster (calcium sulfate dihydrate). Small amounts of additives (normally about 5% by weight) such as sugar, dextrose, boric acid, and starch can be used to make this HRA. Sugar, or dextrose, is currently preferred. Another useful accelerator is "climate stabilized accelerator" or "climate stable accelerator," (CSA) as described in U.S. Patent No. 3,573,947, herein incorporated by reference.

Water/stucco (w/s) ratio, or "WSR" is an important parameter, since excess water must eventually be driven off by heating. In the embodiments of the present invention, a preferred w/s ratio is from about 0.7 to about 1.3. In a preferred embodiment, the w/s ratio is about 0.8.

Other gypsum slurry additives can include accelerators, binders, waterproofing agents, paper or glass fibers, clay, biocide, and other known constituents.

Cover sheets may be made of paper as in conventional gypsum wallboard, although other useful cover sheet materials known in the art (*e.g.* fibrous glass mats) may be used. Paper cover sheets provide strength characteristics in the gypsum wallboard. Useful cover sheet paper includes Manila 7-ply and News-Line 5-ply, available from United States Gypsum Corporation, Chicago, Illinois; Grey-Back 3-ply and Manila Ivory 3-ply, available from Caraustar, Newport, Indiana; and Manila heavy paper and MH Manila HT (high tensile) paper, available from United States Gypsum Corporation, Chicago, Illinois. The paper cover sheets comprise top cover sheets, or face paper, and bottom cover sheets, or back paper. A preferred back cover sheet paper is 5-ply News-Line. Preferred face cover sheet papers include MH Manila HT (high tensile) paper and Manila 7-ply.

Fibrous mats may also be used as one or both of the cover sheets. One useful fibrous mat is a glass fiber mat in which filaments of glass fiber are bonded together by an adhesive. Preferably the fibrous mats will be nonwoven glass fiber mats in which filaments of glass fiber are bonded together by an adhesive. Most preferably, the nonwoven glass fiber mats will have a heavy resin coating. For example, Duraglass nonwoven glass fiber mats, available from Johns-Manville, having a weight of about 1.2-2.0 lb/100 ft² (about 0.059-0.098 kg/m²), with about 40-50% of the mat weight coming from the resin coating, could be used. Other useful fibrous mats include, but are not limited to, woven glass mats and non-cellulosic fabrics.

The following examples further illustrate the invention. They should not be construed as in any way limiting the scope of the invention.

### EXAMPLE 1

### Sample Gypsum Slurry Formulations (Example not in accordance with the present invention)

Gypsum slurry formulations are shown in Table 1 below. All values in Table 1 are expressed as weight percent based on the weight of dry stucco. Values in parentheses are dry weight in pounds (kg) (lb/MSF) (about kg/m²).

**TABLE 1**

| **Component** | **Formulation A** | **Formulation B** |
|---|---|---|
| Stucco (lb/MSF) | (732 lb/MSF) (about 3.57 kg/m²) | (704 lb/MSF) (about 3.45 kg/m²) |
| sodium trimetaphosphate | 0.20 (1.50 lb/MSF)(about 0.0073 kg/m²) | 0.30 (2.14 lb/MSF)(about 0.010 kg/m²) |
| Dispersant (naphthalenesulfonate) | 0.18 (1.35 lb/MSF)(about 0.0066 kg/m²) | 0.58¹ (4.05 lb/MSF)(about 0.02 kg/m²) |
| Pregelatinized starch (dry powder) | 2.7 (20 lb/MSF)(about 0.1 kg/m²) | 6.4 (45 lb/MSF) (about 0.22 kg/m²) |
| Board starch | 0.41 (3.0 lb/MSF)(about 0.02 kg/m²) | 0 |
| Heat resistant accelerator (HRA) | (15 lb/MSF) (about 0.073 kg/m²) | (15 lb/MSF)(about 0.073 kg/m²) |
| Glass fiber | 0.27 (2.0 lb/MSF)(about 0.0098 kg/m²) | 0.28 (2.0 lb/MSF)(about 0.0098 kg/m²) |
| Paper fiber | 0 | 0.99 (7.0 lb/MSF)(about 0.034 kg/m²) |
| Soap* | 0.03 (0.192 lb/MSF)(about 0.00094 kg/m²) | 0.03 (0.192 lb/MSF)(about 0.00094 kg/m²) |
| | | |
| Total Water (lb.) | 805 lb (about 365 kg) | 852 lb (about 386 kg) |
| | | |
| Water / Stucco ratio | 1.10 | 1.21 |

| | | |
|---|---|---|
| *Used to pregenerate foam. ¹ 1.28% by weight as a 45% aqueous solution. | | |

### EXAMPLE 2

### Preparation of Wallboards

Sample gypsum wallboards were prepared in accordance with U.S. Patent Nos. 6,342,284 to Yu et al. and 6,632,550 to Yu et al., herein incorporated by reference. This includes the separate generation of foam and introduction of the foam into the slurry of all of the other ingredients as described in Example 5 of these patents.

Test results for gypsum wallboards made using the Formulations A and B of Example 1, and a normal control board are shown in Table 2 below. As in this example and other examples below, nail pull resistance, core hardness, and flexural strength tests were performed according to ASTM C-473. Additionally, it is noted that typical gypsum wallboard is approximately ½ inch (about 1.3 cm) thick and has a weight of between about 1600 to 1800 pounds per 1,000 square feet of material, or lb/MSF (about 7.7-8.7 kg/m²). ("MSF" is a standard abbreviation in the art for a thousand square feet; it is an area measurement for boxes, corrugated media and wallboard.)

**TABLE 2**

| **Lab test result** | **Control Board** | **Formulation A Board** | **Formulation B Board** |
|---|---|---|---|
| Board weight (lb/MSF) | 1587 lb/MSF)(about 7.75 kg/m²) | 1066 lb/MSF)(about 5.20 kg/m²) | 1042lb/MSF)(about 5.09 kg/m²) |
| Nail pull resistance (lb) | 81.7 lb (about 37.1 kg) | 50.2 lb (about 22.8 kg) | 72.8 lb (about 33.0 kg) |
| Core hardness (lb) | 16.3 lb (about 7.39 kg) | 5.2 lb (about 2.4 kg) | 11.6 lb (about 5.26 kg) |
| Humidified bond load (lb) | 17.3 lb (about 7.85 kg) | 20.3 lb (about 9.21 kg) | 15.1 lb (about 6.85 kg) |
| Humidified bond failure (%) | 0.6 | 5 | 11.1 |
| Flexural strength, face-up (MD) (lb) | 47 lb (about 21 kg) | 47.2 lb (about 21.4 kg) | 52.6 lb (about 23.9 kg) |
| Flexural strength, face-down (MD) (lb) | 51.5 lb (about 23.4 kg) | 66.7 lb (about 30.3 kg) | 78.8 lb (about 35.7 kg) |
| Flexural strength, face-up (XMD) (lb) | 150 lb (about 68 kg) | 135.9 lb (about 61.64 kg) | 173.1 lb (about 78.52 kg) |
| Flexural strength, face-down (XMD) (lb) | 144.4 lb (about 65.5 kg) | 125.5 lb (about 56.9 kg) | 165.4 lb (about 75.0 kg) |

| | | | |
|---|---|---|---|
| MD: machine direction XMD: across machine direction | | | |

As illustrated in Table 2, gypsum wallboards prepared using the Formulation A and B slurries have significant reductions in weight compared to the control board. With reference again to Table 1, the comparisons of the Formulation A board to the Formulation B board are most striking. The water/stucco (w/s) ratios are similar in Formulation A and Formulation B. A significantly higher level of naphthalenesulfonate dispersant is also used in Formulation B. Also, in Formulation B substantially more pregelatinized starch was used, about 6% by weight, a greater than 100% increase over Formulation A accompanied by marked strength increases. Even so, the water demand to produce the required flowability remained low in the Formulation B slurry, the difference being about 10% in comparison to Formulation A. The low water demand in both Formulations is attributed to the synergistic effect of the combination of naphthalenesulfonate dispersant and sodium trimetaphosphate in the gypsum slurry, which increases the fluidity of the gypsum slurry, even in the presence of a substantially higher level of pregelatinized starch.

As illustrated in Table 2, the wallboard prepared using the Formulation B slurry has substantially increased strength compared with the wallboard prepared using the Formulation A slurry. By incorporating increased amounts of pregelatinized starch in combination with increased amounts of naphthalenesulfonate dispersant and sodium trimetaphosphate, nail pull resistance in the Formulation B board improved by 45% over the Formulation A board. Substantial increases in flexural strength were also observed in the Formulation B board as compared to the Formulation A board.

### EXAMPLE 3

### 1/2 Inch (about 1.3cm) Gypsum Wallboard Weight Reduction Trials (Example not in accordance with the present invention)

Further illustrative gypsum wallboard examples (Boards C, D and E), including slurry formulations and test results are shown in Table 3 below. The slurry formulations of Table 3 include the major components of the slurries. Values in parentheses are expressed as weight percent based on the weight of dry stucco.

**TABLE 3**

| **Trial formulation component/parameter** | **Control Board** | **Formulation C Board** | **Formulation D Board** | **Formulation E Board** |
|---|---|---|---|---|
| Dry stucco (lb/MSF) | 1300 (about 6.3 kg/m²) | 1281 (about 6.25 kg/m²) | 1196 (about 5.84 kg/m²) | 1070 (about 5.22 kg/m²) |
| Accelerator (lb/MSF) | 9.2 (about 0.045 kg/m²) | 9.2 (about 0.045 kg/m²) | 9.2 (about 0.045 kg/m²) | 9.2 (about 0.045 kg/m²) |
| DILOFLO ¹ (lb/MSF) | 4.1 (about 0.020 kg/m²) (0.32%) | 8.1 (about 0.040 kg/m²) (0.63%) | 8.1 (about 0.040 kg/m²) (0.68%) | 8.1 (about 0.040 kg/m²) (0.76%) |
| Regular starch (lb/MSF) | 5.6 (about 0.027 kg/m²) (0.43%) | 0 | 0 | 0 |
| Pregelatinized corn starch (lb/MSF) | 0 | 10 (about 0.05 kg/m²) (0.78%) | 10 (about 0.05 kg/m²) (0.84%) | 10 (about 0.05 kg/m²) (0.93%) |
| Sodium trimetaphosphate (lb/MSF) | 0.7 (about 0.003 kg/m²) (0.05%) | 1.6 (about 0.0078 kg/m²) (0.12%) | 1.6 (about 0.0078 kg/m²) (0.13%) | 1.6 (about 0.0078 kg/m²) (0.15%) |
| Total water / stucco ratio (w/s) | 0.82 | 0.82 | 0.82 | 0.84 |

| **Trial formulation test results** | | | | |
|---|---|---|---|---|
| Dry board weight (lb/MSF) | 1611 (about 7.87 kg/m²) | 1570 (about 7.67 kg/m²) | 1451 (about 7.08 kg/m²) | 1320 (about 6.44 kg/m²) |
| Nail pull resistance (lb) | 77.3^{†} (about 35.1 kg) | 85.5 (about 38.8 kg) | 77.2 (about 35.0 kg) | 65.2 (about 29.6 kg) |

| | | | | |
|---|---|---|---|---|
| ^{†} ASTM standard: 77 lb (about 35 kg) ¹ DILOFLO is a 45% Naphthalensulfonate solution in water | | | | |

As illustrated in Table 3, Boards C, D, and E were made from a slurry having substantially increased amounts of starch, DILOFLO dispersant, and sodium trimetaphosphate in comparison with the control board (about a two-fold increase on a percentage basis for the starch and dispersant, and a two- to three-fold increase for the trimetaphosphate), while maintaining the w/s ratio constant. Nevertheless, board weight was significantly reduced and strength as measured by nail pull resistance was not dramatically affected. Therefore, in this illustrative example not in accordance with the present invention , the new formulation (such as, for example, Board D) can provide increased starch formulated in a usable, flowable slurry, while maintaining the same w/s ratio and adequate strength.

### EXAMPLE 4

### Wet Gypsum Cube Strength Test (Example not in accordance with the present invention)

The wet cube strength tests were carried out by using Southard CKS board stucco, available from United States Gypsum Corp., Chicago, Illinois and tap water in the laboratory to determine their wet compressive strength. The following lab test procedure was used.

Stucco (1000 g), CSA (2 g), and tap water (1200 cc) at about 70°F (about 120 °C) were used for each wet gypsum cube cast. Pregelatinized corn starch (20 g, 2.0% based on stucco wt.) and CSA (2 g, 0.2% based on stucco wt.) were thoroughly dry mixed first in a plastic bag with the stucco prior to mixing with a tap water solution containing both naphthalenesulfonate dispersant and sodium trimetaphosphate. The dispersant used was DILOFLO dispersant (1.0 - 2.0%, as indicated in Table 4). Varying amounts of sodium trimetaphosphate were used also as indicated in Table 4.

The dry ingredients and aqueous solution were initially combined in a laboratory Waring blender, the mixture produced allowed to soak for 10 sec, and then the mixture was mixed at low speed for 10 sec in order to make the slurry. The slurries thus formed were cast into three 2"x2"x2" (about 5 x 5 x 5 cm) cube molds. The cast cubes were then removed from the molds, weighed, and sealed inside plastic bags to prevent moisture loss before the compressive strength test was performed. The compressive strength of the wet cubes was measured using an ATS machine and recorded as an average in pounds per square inch (psi). The results obtained were as follows:

**TABLE 4**

| **Test Sample No.** | **Sodium trimetaphosphate, grams (wt% based on dry stucco)** | **DILOFLO ¹ (wt% based on dry stucco)** | **Wet cube weight (2"X2"X2"), (5x5x5 cm) g** | **Wet cube compressive strength, psi** |
|---|---|---|---|---|
| 1 | 0 | 1.5 | 183.57 | 321 (about 2.21 MPa) |
| 2 | 0.5 (0.05) | 1.5 | 183.11 | 357 (about 2.46 MPa) |
| 3 | 1 (0.1) | 1.5 | 183.19 | 360 (about 2.48 MPa) |
| 4 | 2 (0.2) | 1.5 | 183.51 | 361 (about 2.49 MPa) |
| 5 | 4 (0.4) | 1.5 | 183.65 | 381 (about 2.63 MPa) |
| 6 | 10 (1.0) | 1.5 | 183.47 | 369 (about 2.54 MPa) |
| 7 | 0 | 1.0 | 184.02 | 345 (about 2.38 MPa) |
| 8 | 0.5 (0.05) | 1.0 | 183.66 | 349 (about 2.41 MPa) |
| 9 | 1 (0.1) | 1.0 | 183.93 | 356 (about 2.45MPa) |
| 10 | 2 (0.2) | 1.0 | 182.67 | 366 (about 2.52 MPa) |
| 11 | 4 (0.4) | 1.0 | 183.53 | 365 (about 2.52 MPa) |
| 12 | 10 (1.0) | 1.0 | 183.48 | 341 (about 2.35 MPa) |
| 13 | 0 | 2.0 | 183.33 | 345 (about 2.38 MPa) |
| 14 | 0.5 (0.05) | 2.0 | 184.06 | 356 (about 2.45 MPa) |
| 15 | 1 (0.1) | 2.0 | 184.3 | 363 (about 2.50 MPa) |
| 16 | 2 (0.2) | 2.0 | 184.02 | 363 (about 2.50 MPa) |
| 17 | 4 (0.4) | 2.0 | 183.5 | 368 (about 2.54 MPa) |
| 18 | 10 (1.0) | 2.0 | 182.68 | 339 (about 2.34 MPa) |

| | | | | |
|---|---|---|---|---|
| ¹ DILOFLO is a 45% Naphthalensulfonate solution in water | | | | |

As illustrated in Table 4, Samples 4-5, 10-11, and 17, having levels of sodium trimetaphosphate in the about 0.12 - 0.4 % range generally provided superior wet cube compressive strength as compared to samples with sodium trimetaphosphate outside this range.

### EXAMPLE 5

### 1/2 Inch (about 1.3 cm) Light Weight Gypsum Wallboard Plant Production Trials (Example not in accordance with the present invention)

Further trials were performed (Trial Boards 1 and 2), including slurry formulations and test results are shown in Table 5 below. The slurry formulations of Table 5 include the major components of the slurries. Values in parentheses are expressed as weight percent based on the weight of dry stucco.

**TABLE 5**

| **Trial formulation component/parameter** | **Control Board 1** | **Plant Formulation Trial Board 1** | **Control Board 2** | **Plant Formulation Trial Board 2** |
|---|---|---|---|---|
| Dry stucco (lb/MSF) | 1308lb/MSF) (about 6.39 kg/m²) | 1160 lb/MSF) (about 5.66kg/m²) | 1212 lb/MSF) (about 5.92 kg/m²) | 1120 lb/MSF) (about 5.47kg/m²) |
| DILOFLO ¹ (lb/MSF) | 5.98 lb/MSF)(about 0.0292 kg/m²) (0.457%) | 7.98 lb/MSF) (about 0.0390 kg/m²) (0.688%) | 7.18 lb/MSF) (about 0.0351 kg/m²) (0.592%) | 8.99 lb/MSF) (about 0.0439 kg/m²) (0.803%) |
| Regular starch (lb/MSF) | 5.0 lb/MSF)(about 0.024 kg/m²) (0.38%) | 0 | 4.6 lb/MSF) (about 0.022 kg/m²) (0.38%) | 0 |
| Pregelatinized corn starch (lb/MSF) | 2.0lb/MSF)(about 0.0098 kg/m²) (0.15%) | 10 lb/MSF)(about 0.05 kg/m²) (0.86%) | 2.5 lb/MSF) (about 0.012 kg/m²) (0.21%) | 9.0 lb/MSF) (about 0.044 kg/m²) (0.80%) |
| Sodium trimetaphosphate (lb/MSF) | 0.7lb/MSF)(about 0.003 kg/m²) (0.05%) | 2.0 lb/MSF)(about 0.0098 kg/m²) (0.17%) | 0.6 lb/MSF) (about 0.003 kg/m²) (0.05%) | 1.6 lb/MSF) (about 0.0078 kg/m²) (0.14%) |
| Total water / stucco ratio (w/s) | 0.79 | 0.77 | 0.86 | 0.84 |

| **Trial formulation test results** | | | | |
|---|---|---|---|---|
| Dry board weight (lb/MSF) | 1619lb/MSF)(about 7.91 kg/m²) | 1456lb/MSF) (about 7.12 kg/m²) | 1553 lb/MSF) (about 7.58 kg/m²) | 1443 lb/MSF) (about 7.05 kg/m²) |
| Nail pull resistance (lb) | 81.5^{†} lb (about 37.0 kg) | 82.4 lb (about 37.4 kg) | 80.7 lb (36.6 about kg) | 80.4 lb (about 36.5 kg) |
| Flexural strength, average (MD) (lb) | 41.7 lb (about 18.9 kg) | 43.7lb (about 19.8 kg) | 44.8 lb (20.3 about kg) | 46.9 lb (about 21.3 kg) |
| Flexural strength, average (XMD) (lb) | 134.1 lb (about 60.83 kg) | 135.5 lb (about 61.46 kg) | 146 lb (about 66.2 kg) | 137.2 lb (about 62.23 kg) |
| Humidified bond ² load, average (lb) | 19.2 lb (about 8.71 kg) | 17.7 lb (about 8.03 kg) | 20.9 lb (about 9.48 kg) | 19.1 lb (about 8.66 kg) |
| Humidified bond ^{2,3} failure (%) | 1.6 | 0.1 | 0.5 | 0 |

| | | | | |
|---|---|---|---|---|
| ^{†} ASTM standard: 77 lb (about 35 kg) MD: machine direction XMD: across machine direction ¹ DILOFLO is a 45% Naphthalensulfonate solution in water ² 90°F/ 90% Relative Humidity ³ It is well understood that under these test conditions, percentage failure rates < 50% are acceptable. | | | | |

As illustrated in Table 5, Trial Boards 1 and 2 were made from a slurry having substantially increased amounts of starch, DILOFLO dispersant, and sodium trimetaphosphate, while slightly decreasing the w/s ratio, in comparison with the control boards. Nevertheless, strength as measured by nail pull resistance and flexural testing was maintained or improved, and board weight was significantly reduced. Therefore, in this illustrative example not in accordance with the present invention, the new formulation (such as, for example, Trial Boards 1 and 2) can provide increased trimetaphosphate and starch formulated in a usable, flowable slurry, while maintaining substantially the same w/s ratio and adequate strength.

### EXAMPLE 6

### 1/2 Inch (about 1.3 cm) Ultra-Light Weight Gypsum Wallboard Plant Production Trials (Example not in accordance with the present invention)

Further trials were performed (Trial Boards 3 and 4) using Formulation B (Example 1) as in Example 2, except that the pregelatinized corn starch was prepared with water at 10% concentration (wet starch preparation) and a blend of HYONIC 25 AS and PFM 33 soaps (available from GEO Specialty Chemicals, Lafayette, Indiana) was used. For example, Trial Board 3 was prepared with a blend of HYONIC 25 AS and PFM 33 ranging from 65-70% by weight of 25AS, and the balance PFM 33. For example, Trial Board 4 was prepared with a 70/30 wt./wt. blend of HYONIC 25AS/HYONIC PFM 33. The trial results are shown in Table 6 below.

**TABLE 6**

| **Lab test result** | **Trial Board 3 (Formulation B plus HYONIC soap blend 65/35) (n = 12)** | **Trial Board 4 (Formulation B plus HYONIC soap blend 70/30) (n = 34)*** |
|---|---|---|
| Board weight (lb/MSF) | 1106 lb/MSF)(about 5.40 kg/m²) | 1013 lb/MSF)(about 4.95 kg/m²) |
| Nail pull resistance^{a} (lb) | 85.5 lb (about 38.8 kg) | 80.3 lb (about 36.4 kg) |
| Core hardness^{b} (lb) | > 15 lb (> about 6.8 kg) | 12.4 lb (about 5.6 kg) |
| Flexural strength, average^{c} (MD) (lb) | 55.6 lb (about 25.2 kg) | 60.3 ¹ lb (about 27.4 kg) |
| Flexural strength, averaged (XMD) (lb) | 140.1 lb (about 63.6 kg) | 142.3 ¹ lb (about 64.6 kg) |

| | | |
|---|---|---|
| * Except as marked. ¹ n = 4 MD: machine direction XMD: across machine direction ^{a} ASTM standard: 77 lb (about 35 kg) ^{b} ASTM standard: 11 lb(about 5 kg) ^{c} ASTM standard: 36 lb(about 16 kg) ^{d} ASTM standard: 107 lb(about 48.5 kg) | | |

As illustrated in Table 6, strength characteristics as measured by nail pull and core hardness were above the ASTM standard. Flexural strength was also measured to be above the ASTM standard. Again, in this illustrative example not in accordance witth the present invention, the new formulation (such as, for example, Trial Boards 3 and 4) can provide increased trimetaphosphate and starch formulated in a usable, flowable slurry, while maintaining adequate strength.

### EXAMPLE 7

### Percentage Void Volume Calculation in 1/2 Inch Thick Gypsum Wallboard Core As A Function of Board Weight and Saw Cutting Results (Example not in accordance with the present invention)

Further trials were performed in order to determine void volumes and densities (Trial Boards No. 5 to 13) using Formulation B (Example 1) as in Example 2, except that the pregelatinized corn starch was prepared with water at 10% concentration (wet starch preparation), 0.5% glass fiber was used, and naphthalenesulfonate (DILOFLO) was used at a level of 1.2% by weight as a 45% aqueous solution. Soap foam was made using a soap foam generator and introduced into the gypsum slurry in an amount effective to provide the desired densities. In the present example, soap was used at a level from 0.25 lb/MSF (about 0.0012 kg/m²) to 0.45 lb/MSF (about 0.0022 kg/m²). That is, the soap foam usage was increased or decreased as appropriate. In each sample, the wallboard thickness was 1/2 inch (about 1.3 cm), and the core volume was assumed to be uniform at 39.1 ft³/MSF (about 0.0119 m3/m²). Void volumes were measured across 4 ft (about 1.2 m) wide wallboard samples from which the front and back paper was removed. The front and back papers can have a thickness in the range 11-18 mil (about 0.28-0.46 mm) (each side). Void volumes/ pore sizes and pore size distribution were determined by scanning electron microscopy and X-ray CT-scanning technology (XMT).

**TABLE 7**

| **Trial Board No.** | **Board Weight (lb/MSF)** | **Foam Void Volume¹ (ft³/MSF)** | **Foam Pore Size Distribution (%)^{†}** | **Evaporative Void Volume² (ft³/MSF)** | **Evap. Pore Size Distribution (%)^{†}** | **Total Core Void Volume³ (%)** | **Board Core Density (pcf)⁴** |
|---|---|---|---|---|---|---|---|
| 5 | 1600-1700 (Control) (about 7.8-8.3 kg/m²) | 15 (about 0.0046 m³/m²) | 54 | 12.7 (about 0.00387 m³/m²) | 46 | 70.8 | 39-41 (about 620-660 kg/m³) |
| 6 | 1400 (about 6.8 kg/m²) | 19.6 (about 0.00597 m³/m²) | 66 | 10.3 (about 0.00313 m³/m²) | 34 | 76.5 | 34 (about 540 kg/m³) |
| 7 | 1300 (about 6.3 kg/m²) | 21.1 (about 0.00643 m³/m²) | 69 | 9.4 (about 0.0029 m³/m²) | 31 | 78.0 | 31 (about 500 kg/m³) |
| 8 | 1200 (about 5.9 kg/m²) | 20.9 (about 0.00637 m³/m²) | 68 | 10.0 (about 0.00305 m³/m²) | 32 | 79.0 | 28 (about 450 kg/m³) |
| 9 | 1100 (about 5.4 kg/m²) | 21.1 (about 0.00643 m³/m²) | 67 | 10.4 (about 0.00317 m³/m²) | 33 | 80.6 | 26 (about 420 kg/m³) |
| 10 | 1000 (about 5 kg/m²) | 20.9 (about 0.00637 m³/m²) | 65 | 11.1 (about 0.00338 m³/m²) | 35 | 81.8 | 23 (about 370 kg/m³) |
| 11 | 900 (about 4.4 kg/m²) | 23.4 (about 0.00713 m³/m²) | 71 | 9.5 (about 0.0029 m³/m²) | 29 | 84.1 | 21 (about 340 kg/m³) |
| 12 | 800 (about 3.9 kg/m²) | 25.5 (about 0.00777 m³/m²) | 76 | 8.1 (about 0.0025 m³/m²) | 24 | 85.9 | 18 (about 290 kg/m³) |
| 13 | 500 (about 2.4 kg/m²) | 31.5 (about 0.00960 m³/m²) | 88 | 4.5 (about 0.0014 m³/m²) | 12 | 92.1 | 10 (about 160 kg/m³) |

| | | | | | | | |
|---|---|---|---|---|---|---|---|
| ¹ > 10 micron air (bubble) voids ² < 5 micron water voids ³ Based on uniform core vol. = 39.1 ft³/MSF (about 0.0119 m³/m²); *i.e.*, Total core void volume = foam void vol. + evaporative void vol./ 39.1 X 100 ⁴ Based on uniform core vol. = 39.1 ft³/MSF (about 0.0119 m³/m²); *i.e.*, Board core density (pcf) = Board weight (lb/MSF) - weight of paper cover sheets (lb/MSF)/ 39.1 ft³/MSF = Board weight (lb/MSF) - 90 lb/MSF/ 39.1 ft³/MSF (about (0.4 kg/m²)/(0.0119 m³/m²)) ^{†} Percent of total voids measured | | | | | | | |

As illustrated in Table 7, trial board samples having total core void volumes ranging from 79.0% to 92.1% were made, which correspond to board core densities ranging from 28 pcf (about 450 kg/m³) down to 10 pcf (about 160 kg/m³), respectively. As an example, saw cutting of Trial board 10, having a total core void volume of 81.8% and a board core density of 23 pcf (about 370 kg/m³), generated about 30% less dust than control board. As an additional example, if wallboards with a conventional formulation having less binder (as starch with or without dispersant) were made that had significantly less that about 75 - 80% total core void volume, significantly greater dust generation would be expected on cutting, sawing, routing, snapping, nailing or screwing down, or drilling. For example, conventional wallboards can generate dust fragments on saw cutting having an average diameter of about 20-30 microns, and a minimum diameter of about 1 micron. In contrast, this gypsum wallboards will generate dust fragments on saw cutting having an average diameter of about 30-50 microns, and a minimum diameter of about 2 microns; score/snapping will produce even larger fragments.

It has been shown that the combination of several key components used to make the gypsum-containing slurry, namely: stucco, naphthalenesulfonate dispersant, pregelatinized corn starch, sodium trimetaphosphate, and glass and/or paper fibers, in combination with a sufficient and effective amount of soap foam, can have a synergistic effect in producing a useful low density gypsum wallboard that also dramatically reduces gypsum dust formation during knife cutting, saw cutting, score/snapping, drilling, and normal board handling.

### EXAMPLE 8

### Dust Capture in Low Dust Gypsum Wallboard (Example not in accordance with the present invention)

If a wallboard were prepared according to illustrative Example 7, it is expected that the gypsum dust produced on working the wallboard would comprise at least 50% by weight gypsum fragments larger than about 10 microns in diameter. At least about 30% or more of the total dust generated by working the wallboard by cutting, sawing, routing, score/snapping, nailing or screwing down, and drilling, would be captured.

### EXAMPLE 9

### Additional ½ Inch (about 1.3cm) Light Weight Gypsum Wallboard Plant Production Trial Formulation

Further slurry formulations (Trial 14) were prepared as shown in Table 8 below. The slurry formulations of Table 8 include the major components of the slurries. Values in parentheses are expressed as weight percent based on the weight of dry stucco.

**TABLE 8**

| **Trial formulation component/parameter** | **Plant Formulation Trial 14** | **Control Formulation** |
|---|---|---|
| Dry stucco (lb/MSF) | 925 (about 4.52 kg/m²) | 925 (about 4.52 kg/m²) |
| DILOFLO ¹ (lb/MSF) | 14 (1.5%) (about 0.068 kg/m²) | 14 (1.5%) (about 0.068 kg/m²) |
| Hydroxyethylated starch | 26 (2.8%) (about 0.13 kg/m²) | 0 |
| Pregelatinized corn starch (lb/MSF) | 0 | 26 (2.8%) (about 0.13 kg/m²) |
| Sodium trimetaphosphate (lb/MSF) | 2.78 (0.30%) (about 0.0136 kg/m²) | 2.78 (0.30%) (about 0.0136 kg/m²) |
| Glass fiber (lb/MSF) | 2.0 (0.22%) (about 0.0098 kg/m²) | 2.0 (0.22%) (about 0.0098 kg/m²) |
| Heat resistant accelerator (lb/MSF) | 13 (1.4%) (about 0.063 kg/m²) | 13 (1.4%) (about 0.063 kg/m²) |
| Soap blend² (lb/MSF) | 0.42 (0.045%) (about 0.0021 kg/m²) | 0.42 (0.045%) (about 0.0021 kg/m²) |
| Total water / stucco ratio (w/s) | 0.76 | 0.88 |

| | | |
|---|---|---|
| ¹ DILOFLO is a 45% Naphthalensulfonate solution in water ² 85/15 wt./wt. blend of HYONIC 25 AS and PFM 33 soaps. Note that during dynamic manufacturing process, the soap ratio can range from 70/30 upwards to a desired target range, e.g. from 70/30 to 80/20 to 85/15 or up to 90/10. | | |

As shown in Table 8, Trial 14 slurry formulation had a significantly lower water demand, and significantly enhanced fluidity, in that the WSR was about 0.8. For the control formulation, required WSR ranged between 0.88 and 0.90. Therefore, water demand in the Trial 14 slurry composition is about 10% lower than a control slurry containing pregelatinized corn starch.

### EXAMPLE 10

### Additional 1/2 Inch Light (about 1.3 cm) Weight Gypsum Wallboard Plant Production Trials

Sample boards were made using the formulations of Example 9, and tested for strength characteristics.

**TABLE 9**

| **Trial formulation test results** | **Plant Formulation Trial Board 14** | **Control Formulation Board** |
|---|---|---|
| Dry board weight (lb/MSF) | 1211 (about 5.91 kg/m²) | 1206 (about 5.89 kg/m²) |
| Nail pull resistance (lb) | 80.8 (about 36.7 kg) | 73.7 (about 33.4 kg) |

As shown in Table 9, Trial 14 wallboards having hydroxyethylated starch have significantly enhanced nail pull performance.

### EXAMPLE 11

### Alkoxyl Analysis of Representative Starches

Starch samples as in Table 10 were tested for alkoxyl substitution of the cellulose backbone, using an Agilent GC-MS Model no. 6890N/5973I. Alkoxyl analysis was performed using the classical Zeisel reaction with the iodides from alkoxyl groups being determined by gas chromatotraphy-mass spectroscopy.

**TABLE 10**

| | ***Integrated-*** | ***Area-*** | ***Counts*** | | |
|---|---|---|---|---|---|
| **Sample** | **methoxyl** | **ethoxyl** | **1-propoxyl** | **iso-propoxyl** | **toluene** |
| Hydroxyethylated corn starch | 30680 | 492017 | 3773 | 5632 | 12826464 |
| Pregelatinized corn starch | 66856 | 16691 | 15623 | 8856 | 13228883 |
| LC-211 acid-modified starch¹ | 64203 | 16166 | 21320 | 1493 | 13197117 |

| | | | | | |
|---|---|---|---|---|---|
| ¹ Available from ADM Company, Decatur, Illinois. | | | | | |

### EXAMPLE 12

### Viscosity Test Results and Film-Forming Tests (Example not in accordance with the present invention)

Aqueous samples were prepared for testing as shown in Table 11 as follows: the components were suspended in deionized water (250 g). Cooking was performed by heating on a conventional hot plate with magnetic stirring until a temperature of 240-247° F (about 116-119° C) was reached. After cooking, viscosity was measured as reported in Table 11. Next, a 20 g sample of cooked suspension in a weighing pan was dried overnight at 112-116° F (about 44.4-46.7° C) to form the test films of Table 11.

**TABLE 11**

| **Sample No.** | **Component amounts (g)** | **Uncooked Suspension Average Viscosity (mPa's)¹** | **Cooked Suspension Average Viscosity (mPa's)¹** | **Film Strength Characteristics** |
|---|---|---|---|---|
| 1 | Hydroxyethylated starch (16.6) | 7 | 29 | Softest and most flexible |
| 2 | Hydroxyethylated starch (16.6) and DAXAD dispersant ² (8.6) | 7 | 27 | Slightly harder and slightly less flexible |
| 3 | Hydroxyethylated starch (16.6) and STMP (1.6) | 7 | 28 | Slightly harder and slightly less flexible |
| 4 | Hydroxyethylated starch (16.6), DAXAD dispersant² (8.6), and STMP (1.6) | 8 | 32 | Ideal combination of hardness and flexibility |
| 5 | Pregelatinized corn starch (16.6) | 34 | 38 | Very hard and less flexible than above samples |

| | | | | |
|---|---|---|---|---|
| STMP: sodium trimetaphosphate ¹ Brookfield viscosity (spindle #2 @ 50 rpm) ² DAXAD is a 45% Naphthalenesulfonate solution in water | | | | |

As shown in Table 11, sample 4 as an uncooked suspension shows outstanding 75% viscosity reduction compared to sample 5. In addition, sample 4 also has excellent film-forming characteristics in terms of hardness and flexibility. These film-forming characteristics produce a marked improvement in nail pull results in wallboard made using the noted combination of a hydroxyethylated starch, a naphthalenesulfonate dispersant, and sodium trimetaphosphate.

## Claims

1. A gypsum-containing slurry comprising: water, stucco, a hydroxyethylated starch, sodium trimetaphosphate , and a naphthalenesulfonate dispersant, wherein the hydroxyethylated starch is present in an amount from 0.5% by weight to 10% by weight based on the weight of stucco, wherein the naphthalenesulfonate dispersant is present in an amount from 0.1% to 3.0% by weight based on the weight of stucco, and wherein the sodium trimetaphosphate is present in an amount of 0.1% to 0.4% by weight based on the weight of stucco,
wherein the hydroxyethylated starch is present in an amount of 3% by weight based on the weight of stucco, wherein the sodium trimetaphosphate is present in an amount of 0.3% by weight based on the weight of stucco, and wherein the naphthalenesulfonate dispersant is in the form of an aqueous solution containing 40% to 45% by weight naphthalenesulfonate and the aqueous solution is present in an amount of 1.5% by weight based on the weight of stucco.

2. A lightweight high strength gypsum wallboard comprising:
a set gypsum composition formed between two substantially parallel cover sheets, the set gypsum composition made using a gypsum-containing slurry comprising: water, stucco, a hydroxyethylated starch. sodium trimetaphosphate and a naphthalenesulfonate dispersant, wherein the hydroxyethylated starch is present in an amount from 0.5% by weight to 10% by weight based on the weight of stucco, wherein the naphthalenesulfonate dispersant is present in an amount from 0.1% to 3.0% by weight based on the weight of stucco. and wherein the sodium trimetaphosphate is present in an amount of 0.1 % to 0.4% by weight based on the weight of stucco.
wherein the hydroxyethylated starch is present in an amount of 3% by weight based on the weight of stucco.

## Patentansprüche

1. Gipshaltige Aufschlämmung umfassend: Wasser, Stuckgips, eine hydroxyethylierte Stärke, Natriumtrimetaphosphat und ein Naphthalinsulfonat-Dispergiermittel, wobei die hydroxyethylierte Stärke in einer Menge von 0,5 Gew.-% bis 10 Gew.-%, auf das Gewicht des Stuckgipses bezogen, vorliegt, wobei das Naphthalinsulfonat-Dispergiermittel in einer Menge von 0,1 bis 3,0 Gew.-%, auf das Gewicht des Stuckgipses bezogen, vorliegt und wobei das Natriumtrimetaphosphat in einer Menge von 0,1 bis 0,4 Gew.-%, auf das Gewicht des Stuckgipses bezogen, vorliegt, wobei die hydroxyethylierte Stärke in einer Menge von 3 Gew.-%, auf das Gewicht des Stuckgipses bezogen, vorliegt, wobei das Natriumtrimetaphosphat in einer Menge von 0,3 Gew.-%, auf das Gewicht des Stuckgipses bezogen, vorliegt und wobei das Naphthalinsulfonat-Dispergiermittel in Form einer wässrigen Lösung vorliegt, die 40 bis 45 Gew.-% Naphthalinsulfonat enthält und die wässrige Lösung in einer Menge von 1,5 Gew.-%, auf das Gewicht des Stuckgipses bezogen, vorliegt.

2. Leichtgewichtige hochfeste Gipswandplatte umfassend:
eine abgebundene Gipszusammensetzung, die zwischen zwei im Wesentlichen parallelen Deckplatten gebildet ist, wobei die abgebundene Gipszusammensetzung unter Verwendung einer gipshaltigen Aufschlämmung hergestellt wird, welche umfasst:
Wasser, Stuckgips, eine hydroxyethylierte Stärke, Natriumtrimetaphosphat und ein Naphthalinsulfonat-Dispergiermittel, wobei die hydroxyethylierte Stärke in einer Menge von 0,5 Gew.-% bis 10 Gew.-%, auf das Gewicht des Stuckgipses bezogen, vorliegt, wobei das Naphthalinsulfonat-Dispergiermittel in einer Menge von 0,1 bis 3,0 Gew.-%, auf das Gewicht des Stuckgipses bezogen, vorliegt und wobei das Natriumtrimetaphosphat in einer Menge von 0,1 bis 0,4 Gew.-%, auf das Gewicht des Stuckgipses bezogen,
wobei die hydroxyethylierte Stärke in einer Menge von 3 Gew.-%, auf das Gewicht des Stuckgipses bezogen, vorliegt.

## Revendications

1. Suspension contenant du gypse comprenant: de l'eau, du stuc, un amidon hydroxyéthylé, du trimétaphosphate de sodium, et un dispersant sulfonate de naphtalène, l'amidon hydroxyéthylé étant présent en une quantité de 0,5 % en poids à 10 % en poids sur la base du poids du stuc, le dispersant sulfonate de naphtalène étant présent en une quantité de 0,1 % à 3,0 % en poids sur la base du poids du stuc, et le trimétaphosphate de sodium étant présent en une quantité de 0,1 % à 0,4 % en poids sur la base du poids du stuc, dans laquelle l'amidon hydroxyéthylé étant présent en une quantité de 3 % en poids sur la base du poids du stuc, le trimétaphosphate de sodium étant présent en une quantité de 0,3 % en poids sur la base du poids du stuc, et le dispersant sulfonate de naphtalène se présentant sous la forme d'une solution aqueuse contenant 40 % à 45 % en poids de sulfonate de naphtalène et la solution aqueuse étant présente en une quantité de 1,5 % en poids sur la base du poids du stuc.

2. Panneau mural en gypse de poids léger et de haute résistance comprenant:
une composition de gypse durcie formée entre deux feuilles de revêtement substantiellement parallèles, la composition de gypse durcie fabriquée en utilisant une suspension contenant du gypse comprenant : de l'eau, du stuc, un amidon hydroxyéthylé, du trimétaphosphate de sodium, et un dispersant sulfonate de naphtalène, l'amidon hydroxyéthylé étant présent en une quantité de 0,5 % en poids à 10 % en poids sur la base du poids du stuc, le dispersant sulfonate de naphtalène étant présent en une quantité de 0,1 % à 3,0 % en poids sur la base du poids du stuc, et le trimétaphosphate de sodium étant présent en une quantité de 0,1 % à 0,4 % en poids sur la base du poids du stuc, dans laquelle l'amidon hydroxyéthylé étant présent en une quantité de 3 % en poids sur la base du poids du stuc.
